# EUROPÄISCHE PATENTANMELDUNG

(11) **EP 3 299 801 A2**
(43) Veröffentlichungstag der Anmeldung: **28.03.2018**
(21) Anmeldenummer: 17192778.3
(22) Anmeldetag: 22.09.2017
(51) Int. Cl.: G01N 21/88, G01N 21/95

(54) **VERFAHREN UND VORRICHTUNG ZUR DARSTELLUNG VON FEHLERN AN WERKSTÜCKEN**

(30) Priorität: 23.09.2016 DE 102016011554
(71) Anmelder: Vision Tools Bildanalyse Systeme GmbH, 68753 Wäghäusel (DE)
(72) Erfinder: Djulic, Josef, 74930 Ittlingen (DE)
(74) Vertreter: 2s-ip Schramm Schneider Bertagnoll Patent- und Rechtsanwälte Part mbB

(57) **Zusammenfassung**

Verfahren zum Anzeigen eines Fehlers, der sich an einer Prüfstelle an einem Werkstück befindet, mittels eines Bildauswertesystems, das mit zumindest einer beweglichen Kamera ausgestattet ist, wobei das Werkstück auf der Basis seiner geometrischen Daten (CAD-Konstruktions- oder Darstellungsdaten) in einer Darstellung (10) auf einem Bildschirm zusammen mit einer Markierung des Fehlers an der Prüfstelle dargestellt wird (9), wobei ein Bild der Prüfstelle in einer vorbestimmten Werkstückpose durch die zumindest eine Kamera in einer jeweiligen vorbestimmten Kameraaufnahmepose aufgenommen wird, wobei die zumindest eine Kamera eine hinsichtlich ihrer Kamerageometrie kalibrierte Kamera ist und die Markierung in der Dar-stellung des Werkstücks an der Prüfstelle positioniert wird durch Auswerten des Bildes, der Werkstückpose (8), der jeweiligen Kameraaufnahmepose und der jeweiligen Kamerageometrie. Eine zusätzliche Einblendung (11) des zugehörigen Referenzbildes erleichtert die Beurteilung des Fehlers.

## Beschreibung

Die Erfindung betrifft ein Verfahren und eine Vorrichtung zur Darstellung von Fehlern, die an einem Werkstück mittels eines Bildauswertungssystems erkannt wurden. Das Bildauswertesystem kann mit 2D- oder 3D- Bildsensoren ausgerüstet sein: mit einer oder mehreren konventionellen Kameras, die Grauwert- oder Farbbilder liefern, oder/und mit einem oder mehreren 3D-Bildsensoren, die Abstandsbilder liefern.

Bei vollautomatischen Bildauswertungssystemen zur Qualitätskontrolle an Werkstücken sind häufig Anzeigemittel nachgeschaltet, die einem Bediener den Ort und die Art von Fehlern oder vermuteten Fehlern anzeigen. Der Bediener kann so die Fehlerstelle direkt am Objekt lokalisieren und eine endgültige Entscheidung über die Fehlerhaftigkeit fällen; in vielen Fällen kann der Bediener den Fehler manuell beseitigen. Liegen Pseudofehler vor (z.B. scheinbarer Fehler, da das Merkmal zufällig mit biegeschlaffen Teilen wie Kabeln oder Bowdenzügen verdeckt), wird das Werkstück vom Bediener als "In Ordnung" quittiert.

Bekannt sind beispielsweise abwaschbare Farbmarkierungen direkt am Objekt (siehe z.B. DE 3325 125 C1 für Materialbahnen oder DE 10 2010 037 788 B4 [0009-0010]). Der Nachteil ist offensichtlich: der apparative Aufwand ist hoch und die Farbmarkierungen müssen wieder beseitigt werden. Für die Prüfung der Lackierung von Fahrzeugen wird beispielsweise nach DE 101 11 409 A1 vorgeschlagen, die Fehlerstellen mittels optischer Projektion einer Markierung auf die betreffenden Stellen anzuzeigen. DE 200 04 332 U1 S. 4 schlägt für die Kontrolle von Platinen eine Anzeige mittels gesteuertem Laserpointer vor. Bei DE 10 2010 037 788 B4 wird - insbesondere für die Kontrolle von Glasscheiben - eine Leuchtanzeige vorgeschlagen auf der Oberfläche des Prüflings, hinter dem Prüfling oder in dem Bereich von mindestens einer angrenzenden Seitenkante. Hier ist einerseits der apparative Aufwand hoch, außerdem ist die Methode in der Praxis auf zweidimensionale Objekte wie Glasscheiben beschränkt.

Die verbreitetste Form der Anzeige ist eine Darstellung mittels Bildschirm. Dieser Bildschirm befindet sich häufig an einer weit entfernt angeordneten Kontroll- oder Reparaturstation, an die die fehlerhaften oder auch nur vermeintlich fehlerhaften Werkstücke ausgeschleust werden. Der Bildschirm ist entweder direkt am Bildverarbeitungssystem angeschlossen oder an einen separaten Computer oder zentralen Rechner, an den lediglich die Fehlerbilder - meist mit Zusatzinformation über den Fehlerort und die Fehlerart - übertragen werden. Fehlerbilder sind mittels Sensor aufgenommene 2D- oder 3D-Bilder, in denen die Abbildung des vom Bildauswertesystem detektierten Fehlers oder "vermuteten" Fehlers enthalten ist.

Im Stand der Technik bekannt ist die Darstellung des Werkstücks anhand seiner CAD-Daten und die optische Kenntlichmachung der detektierten Fehler in dieser Darstellung an ihren jeweiligen Stellen, den sogenannten Prüfstellen, in deren begrenzter Umgebung (Prüfbereiche) Fehler zu finden sind. Diese Form der Anzeige ist mit Standard-Computer-Ausrüstung realisierbar, damit preiswert und insbesondere sehr flexibel.

Ein Problem ergibt sich bei der letztgenannten Methode jedoch, wenn der Bildsensor beweglich montiert ist, speziell an einem Roboter, und das Einteachen des Bildauswertesystems mittels manuell gesteuerten Vorzeigens erfolgt.

Hierbei nimmt der Roboter am Endeffektor und damit auch der Sensor eine oder mehrere verschiedene Posen ein.

Als Einteachen des Bildauswertesystems bezeichnet man hier das Festlegen der zumindest einen Pose des zumindest einen Sensors, mit welcher das Werkstück (in seinerseits vorbestimmter Pose) vom zumindest einen Sensor aufgenommen wird. Als Pose bezeichnet man die Orientierung und die Position eines Sensors (bzw. Effektors eines Roboters, an dem der Sensor angeordnet ist) oder eines Werkstücks im 3D-Raum.

Zur Vereinfachung der Beschreibung der Aufgabe und deren Lösung gehen wir zunächst davon aus, dass zur Bildaufnahme an einem Roboter eine einzelne Kamera montiert ist.

Zum Einteachen wird in diesem Fall die Kamera mittels Roboter an verschiedene Prüfstellen des Werkstücks gefahren, dort werden anhand von Bildaufnahmen Referenzbilder aufgenommen, anhand derer die eigentliche Bildauswertung parametriert wird. Normalerweise sind die Werkstücke, mit denen Referenzbilder aufgenommen werden, fehlerfrei, das ist aber nicht zwingend erforderlich, und zwar wenn das Bildauswerteverfahren manuell definiert wird. Besonders elegant ist dieses Verfahren, wenn hierzu ein moderner, direkt handgeführter, sogenannter kooperativer Roboter verwendet wird. Das Einteachen geschieht hier, ohne dass spezielle Kenntnisse über das Steuern mittels Bedienpanel erforderlich sind, intuitiv, einfach durch Hinbewegen des Roboters an die einzelnen Prüfstellen per Hand.

Um jedoch eine spätere Anzeige des Fehlerortes am Werkstück auf Basis seiner CAD-Daten an einem Bildschirm zu ermöglichen, sind trotzdem Eingaben an einer Bedieneinheit erforderlich, und zwar unter Bezugnahme auf die Ortskoordinaten der jeweiligen Prüfstelle in den CAD-Daten. Hierzu muss in die CAD-Daten des Werkstücks an die jeweilige Prüfstelle von Hand eine Markierung eingefügt (also hineinkodiert) werden, die dann zusammen mit dem Werkstück angezeigt werden kann. Dies hat zusätzlich zur Folge, dass, sofern sich der Ort des Fehlers innerhalb des Prüfbereichs ändert, die Markierung nicht mehr an der Stelle des Fehlers sitzt.

Aufgabe der vorliegenden Erfindung ist es, solche anspruchsvollen Eingaben zu vermeiden und damit das Einteachen zu vereinfachen.

Die Aufgabe wird entsprechend Hauptanspruch gelöst.

Erfindungsgemäß bereitgestellt wird ein Verfahren zum Anzeigen eines Fehlers, der sich an einer Prüfstelle an einem Werkstück befindet, mittels eines Bildauswertesystems, das mit zumindest einer beweglichen Kamera ausgestattet ist, wobei das Werkstück auf der Basis seiner geometrischen Daten (CAD-Konstruktions- oder Darstellungsdaten) in einer Darstellung auf einem Bildschirm zusammen mit einer Markierung des Fehlers an der Prüfstelle dargestellt wird, wobei
ein Bild der Prüfstelle in einer vorbestimmten Werkstückpose durch die zumindest eine Kamera in einer jeweiligen vorbestimmten Kameraaufnahmepose aufgenommen wird,
wobei
die zumindest eine Kamera eine hinsichtlich ihrer Kamerageometrie kalibrierte Kamera ist und
die Markierung in der Darstellung des Werkstücks an der Prüfstelle positioniert wird durch Auswerten des Bildes, der Werkstückpose, der jeweiligen Kameraaufnahmepose und der jeweiligen Kamerageometrie.

Die Erfindung ermöglicht es also, dass das Werkstück auf Basis seiner geometrischen Daten (CAD-Konstruktions- oder Darstellungsdaten) zusammen mit der Markierung an der Prüfstelle am Bildschirm dargestellt wird, ohne dass man zuvor die Prüfstelle in die geometrischen Daten des Werkstücks eingeben müsste. Vielmehr wird die der Prüfstelle (am Werkstück) entsprechende Stelle in der Darstellung des Werkstücks (aus den Geometriedaten) am Bildschirm durch das erfinderische Verfahren durch Auswerten des Bildes, der Werkstückpose, der jeweiligen Kameraaufnahmepose und der jeweiligen Kamerageometrie automatisch ermittelt.

Weil die zu markierende Stelle erst durch Auswerten des Bildes, der jeweiligen Kamerapose und der Kamerageometrie ermittelt wird, muss die exakte Prüfstelle auf dem Werkstück gar nicht präzise vorbestimmt werden, sondern kann mit durch das Auswertesystem beim Anzeigen des Werkstücks auf dem Bildschirm jeweils ermittelt werden. Es ist daher auch unschädlich, wenn die Fehlerstelle innerhalb des Prüfbereichs der Prüfstelle auf dem Werkstück wandert oder wenn die Fehlerstelle im Bild wandert, etwa weil sich eine Pose geändert hat. Es wird in der Darstellung stets genau die Stelle des gerade im Kamerabild erfassten Fehlers markiert.

Vorteilhafte Weiterbildungen der Erfindung umfassen die folgenden Merkmale.

In der Darstellung kann die Markierung am Werkstück positioniert werden aus einem Schnittpunkt einer Sichtlinie im Bild der zumindest einen Kamera mit der Oberfläche des Werkstücks an der Prüfstelle.

Das Werkstück kann in derjenigen Pose auf dem Bildschirm dargestellt werden, in welcher das Bild des Werkstücks aufgenommen wurde (Werkstückpose). Das heißt, das auf Basis seiner Geometriedaten angezeigte Werkstück (ein synthetisches Bild) kann deckungsgleich mit dem Bild des aufgenommenen Werkstücks (ein "optisches" Bild) sein.

Die zumindest eine Kamera kann als 3D-Bildsensor ausgestaltet sein, der eine 3D-Position der Prüfstelle ermittelt.

Das Bild der Prüfstelle kann auf dem Bildschirm kann nahe oder direkt an der Markierung eingeblendet werden.

Ein Referenzbild der Prüfstelle kann auf dem Bildschirm nahe oder direkt an der Markierung eingeblendet werden.

Die zumindest eine Kamera kann an einem beweglichen Roboterarm angeordnet sein, wobei der Roboterarm hinsichtlich seiner Geometrie kalibriert ist.

Die zumindest eine Kamera kann in einer Einrichtungsphase kalibriert werden.

Die vorbestimmte Werkstückpose und die jeweilige vorbestimmte Kameraaufnahmepose können in einer Einteachphase mittels Vorzeigen des Werkstücks der zumindest einen Kamera definiert werden.

Die Erfindung umfasst auch ein Bildauswertesystem, welches eingerichtet ist, das erfindungsgemäße Verfahren auszuführen.

Ferner umfasst die Erfindung Programmcode, der, wenn in ein Bildauswertesystem geladen, das Verfahren darin zur Ausführung bringt.

Die Erfindung umfasst ferner ein Computerprogrammprodukt, welches Programmcode enthält, der, wenn in ein Bildauswertesystem geladen, das Verfahren darin zur Ausführung bringt.

Als Kamerakalibrierung bezeichnet man allgemein die Bestimmung der Abbildungsparameter einer Kamera, unabhängig davon, welches optische Kameramodell gewählt wird. Dabei kann man die inneren Parameter unterscheiden, die die (optische) Abbildung durch die Kamera beschreiben, und die äußeren Parameter, die Position und die Orientierung (also die Pose) der Kamera im Raum beschreiben.

Die hinsichtlich ihrer Geometrie kalibrierte Kamera meint also die Bestimmung der inneren Parameter, also die Verfügbarkeit der inneren Parameter für das Bildauswertesystem. Die äußeren Parameter sind durch die Kameraaufnahmepose vorbestimmt.

Zur Durchführung einer Kamerakalibrierung gibt es eine umfangreiche Literatur.

Die erfindungsgemäße Lösung wird anhand der Figuren im Einzelnen beschrieben.

Es zeigen
- Fig. 1: ein Werkstück, das in einer oder mehreren verschiedenen Roboterposen kontrolliert wird, und
- Fig. 2: eine schematische Darstellung des Werkstücks am Bildschirm mit einer Markierung einer Prüfstelle.

Wir unterscheiden grundsätzlich zwischen den drei Phasen "Einrichten" und "Einteachen" und "Ausführen". Das Einrichten findet durch geschultes Personal lediglich einmal statt nach der Installation der Hardware, ggf. auch in bestimmten Serviceintervallen oder in Ausnahmesituationen wie nach einem Crash. Das Einteachen hingegen findet durch die Bediener statt und muss jedes Mal realisiert werden, wenn neue Werkstücke zu bearbeiten sind oder wenn sich die Posen oder Prüfkriterien ändern sollen. Beim Ausführen schließlich werden die Werkstücke an den verschiedenen Prüfstellen mittels Bildauswertung auf Fehler überprüft, im Fehlerfall werden die Fehler an einem Bildschirm auf einer Darstellung des Werkstücks angezeigt. Auch fehlerfreie Merkmale können zur Veranschaulichung des Prüfprozesses als solche angezeigt werden. In der Ausführungsphase arbeitet das System vollautomatisch mit den beim Einteachen festgelegten Posen und der inneren Parametrierung der Kamera.

Die vorliegende Erfindung betrifft insbesondere die Ausführungsphase und vereinfacht die Einteachphase.

### A) Einrichten:

Der Sensor (die Kamera oder die Kameras) wird vorzugsweise beim Einrichten kalibriert.

Nach Kalibrierung ist die Sensor- bzw. Kamerageometrie relativ zur Robotergeometrie bekannt. D.h. für jede Roboterpose kann auch die Lage der optischen Achse der Kamera im Raum berechnet werden.

Die Geometriedaten des Werkstücks werden zumindest grob als bekannt vorausgesetzt, das ist normalerweise über seine CAD-Konstruktions- oder Darstellungsdaten gegeben, in Ausnahmefällen geschieht dies beim Einrichten durch Ausmessen.

### B) Einteachen:

Das Einteachen des Bildauswertesystems erfolgt mittels manuell gesteuerten Vorzeigens des zu prüfenden Werkstücks, besonders einfach durch manuelles Verfahren eines kooperativen Roboters. In Vorzeigeposition können die Posenparameter des Roboters (bzw. des zumindest einen Sensors, der am Roboter angeordnet ist) automatisch gespeichert werden. Mit einer Pose des zumindest einen Sensors können auch mehrere Prüfstellen am Werkstück erfasst werden.

### C) Ausführen:

Erfindungsgemäß sind beim Ausführen die jeweiligen Posen von Kamera und Werkstück bekannt.

Bei intern kalibrierter Kamera ist es dann möglich, für einen Punkt im 2D-Bild der Kamera den zugehörigen 3D-Strahl zu bestimmen. Aus dem Fehlerort (also dem Ort des Fehlers im Prüfbereich der entsprechenden Prüfstelle) im 2D-Bild der Kamera wird nun der zugehörige 3D-Strahl bestimmt. Aus dessen rechnerischem Schnittpunkt mit der Oberfläche des über seine geometrischen Daten (z.B. als CAD-Modell) gegebenen Werkstücks, dessen Pose ja bekannt ist, wird die Position des Fehlerorts in den geometrischen Daten des Werkstücks (z.B. im CAD-Modell) bestimmt.

In vielen Fällen ist die Pose des Werkstücks immer gleich, z.B. über einen mechanischen Stopper, über eine Lichtschranke o.ä. In Sonderfällen wird die Lage des Werkstücks - und damit die Änderung gegenüber der Pose in der Einteachphase über zusätzliche Sensoren oder über das Bildverarbeitungssystem selbst erfasst.

Es kann also, sobald die Position eines Merkmals im Bild bekannt ist, die Lage der Sichtlinie auf dieses Merkmal berechnet werden. Dies kann beliebig in Raumkoordinaten oder Roboterkoordinaten realisiert werden.

Zumindest für diejenigen Prüfstellen, an denen die Bildauswertung Fehlerhaftigkeit signalisiert, wird eine Sichtlinie berechnet, vorzugsweise die Sichtlinie auf das fehlerhafte Merkmal oder die optische Achse der Kamera, und daraus wird dann der Schnittpunkt mit der Oberfläche des Werkstücks, dessen Pose bekannt ist, bestimmt.

Bei der Berechnung des Schnittpunktes ist das den Posen gemeinsam zugrunde gelegte Koordinatensystem beliebig, z.B. ein beliebiges Raum-Koordinatensystem, das Roboterkoordinatensystem, aber auch das Kamerakoordinatensystem oder das Werkstück-Koordinatensystem kann dabei verwendet werden.

Das Werkstück wird anhand seiner bekannten Geometrie am Bildschirm dargestellt und aufgrund der Kenntnis der Position des Schnittpunktes am Werkstück mit der Sichtlinie wird an dieser Stelle in der Darstellung durch eine Markierung am Bildschirm das Merkmal angezeigt. Bei dreidimensionalen Werkstücken wie z.B. Motoren kann die Darstellung räumlich beliebig gedreht sein, vorteilhafterweise so, dass die Fehlerstelle auf der dem Betrachter zugewandten Seite erscheint. Ist das Werkstück an Prüfstellen auf verschiedenen Seiten des Werkstücks fehlerhaft, kann dies natürlich zeitlich hintereinander geschehen oder parallel mit mehreren Darstellungen mit jeweils entsprechend gedrehter Darstellung.

Sind Werkstück- und Sensorposen in der Ausführungsphase gleichbleibend (d.h. es gibt keine Änderung der Posen, jedenfalls relativ zueinander), kann die Berechnung der Schnittpunkte mit der optischen Achse (falls diese als Sichtlinie dient) einmalig, z.B. in der Einteachphase vorgenommen werden.

Methoden, die Werkstückpose zu ermitteln, sind im Stand der Technik bekannt. Die Werkstückpose wird hier also als dem Bildauswertesystem bekannt vorausgesetzt.

Wird ein Bildauswertesystem, welches zumindest eine im obigen Sinn kalibrierte Kamera umfasst, verwendet, kann die Werkstückpose durch das Bildauswertesystem (bei ihm bekannten Geometriedaten) automatisch ermittelt werden. Somit können Werkstückpose und Kameraaufnahmepose in der Ausführungsphase geändert werden, ohne dass es hierfür einer neuen Einteachphase bedürfte. Dies schafft eine weitere Flexibilität des erfindungsgemäßen Verfahrens.

Anstelle eines klassischen Bildschirms kann natürlich ebenso ein modernes Augmented-Reality-System eingesetzt werden.

Somit wird durch die vorliegende Erfindung eine vollautomatische Ausführungsphase einschließlich Darstellung der Fehlstellen erreicht, ohne dass in der Einteachphase die Position der Prüfstellen in den CAD-Daten gehandhabt werden muss, was ein sehr einfaches, intuitives Vorgehen beim Einteachen ermöglicht.
Verallgemeinerung: 3D-Sensor.

Wird statt einer einzelnen Kamera ein 3D-Sensor verwendet, ist die hier geschilderte Lösung ebenso realisierbar. Verwendet der 3D-Sensor ein Stereo-Kamerapaar, so kann zur Bestimmung des Schnittpunktes eine der beiden Kameras verwendet werden. Stattdessen kann für Stereo-Kamerapaare, aber auch als Sichtlinie eine andere Achse analog zur optischen Achse definiert werden, z.B. eine Mittelachse zwischen den beiden Kameras, die zur Schnittpunktsberechnung herangezogen werden kann. Überdies ist bei 3D-Sensoren der Fehlerort im Raum nach Auswertung bekannt; somit kann der Ort am Werkstück, dessen Geometrie und Pose bekannt ist, direkt bestimmt werden.

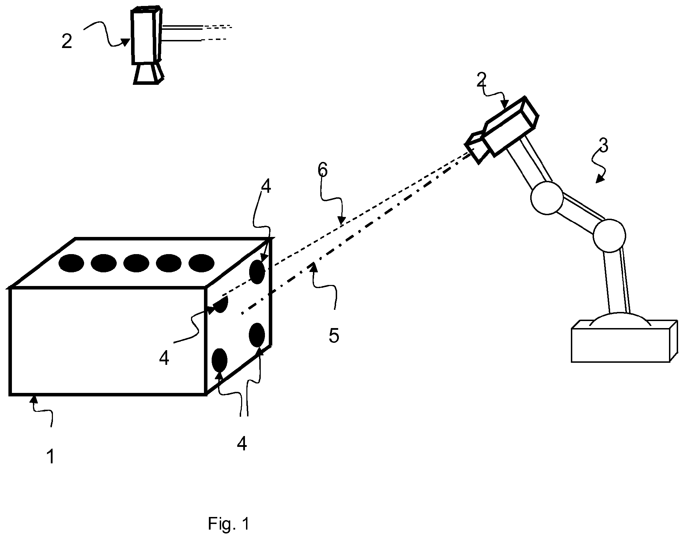

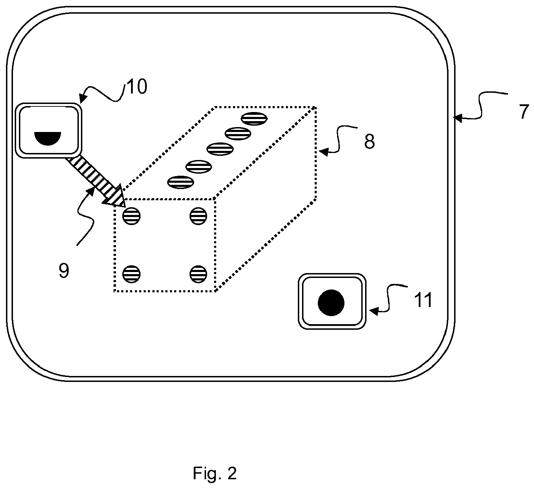

Fig. 1 zeigt schematisch und beispielhaft ein Werkstück 1, das mit einer oder mehreren Kameras 2, die an einem oder mehreren Robotern 3 (ohne Verlust der Allgemeinheit mit nur 3 Freiheitsgraden gezeichnet) montiert sind, in einer oder mehreren verschiedenen Roboterposen kontrolliert wird. In der gezeichneten Roboterpose werde die Stirnseite des quaderförmigen Werkstücks kontrolliert (oder ein Teil davon.) Auf der Stirnseite befinden sich 4 zu kontrollierende Merkmale 4, von denen eines (links oben) unvollständig ausgeprägt und damit fehlerhaft ist. 5 ist die optische Achse bei der betreffende Roboterpose, die als Sichtlinie dienen kann, 6 ist die Sichtlinie direkt auf das fehlerhafte Merkmal bei dieser Roboterpose. Beide Linien sind aufgrund der Kamerakalibrierung im Dreidimensionalen bekannt. Nun wird der Schnittpunkt der Sichtlinie mit der Oberfläche des Werkstücks, dessen Orientierung und Lage (Pose) bekannt ist, berechnet. Damit ist bekannt, welche Position am Werkstück auf dem Monitor dargestellt werden soll. Fig. 2 zeigt schematisch eine solche Darstellung mit dem Bildschirm 7, einer schematischen Darstellung 8 des Werkstücks.

Die schematische Darstellung stammt aus den 3D-Geometriedaten bzw. aus vorher ausgemessenen Daten. Die schematische Darstellung erfolgt vorzugsweise, wie gezeigt, so gedreht, dass das Merkmal auf der Betrachterseite liegt. Zur Erleichterung des Auffindens der Fehler wird die Position des fehlerhaften Merkmals mit grafischen Mitteln in der schematischen Darstellung markiert, in Fig. 2 geschieht dies durch Einblendung eines Pfeils 9. Aber auch andere Mittel sind zur Markierung möglich, wie das Hervorheben der Merkmale durch Farbe, durch Blinken, durch Zeichnen mit anderer Linienstärke, durch Umfahren mit einem Rahmen (Kreis, Ellipse etc. oder einem Lupensymbol), oder Kombinationen davon. Je nachdem, wie gravierend der Fehler ist, kann die Darstellung entsprechend gesteigert werden, z.B. nach einem Ampelsystem: kleinere, tolerierbare Fehler gelb, gravierende Fehler rot, fehlerfreie Merkmale grün.

Mit einer Einblendung 10 des Fehlerbildes, vorzugweise, wie dargestellt, eingegrenzt auf das fehlerhafte Merkmal in seiner Umgebung, wird die Beurteilung des Fehlers durch den Bediener erleichtert. Eine zusätzliche Einblendung 11 des zugehörigen Referenzbildes, wiederum vorzugweise eingegrenzt auf das fehlerhafte Merkmal in seiner Umgebung, erleichtert die Beurteilung des Fehlers durch den Bediener weiter. Günstig ist es, die Platzierung solcher Bildeinblendungen dynamisch an die Position des Fehlers in der Darstellung anzupassen, wie in Fig. 2 anhand der Einblendung 10 des Fehlerbildes gezeigt, die direkt am Pfeilende des Pfeils 9 positioniert ist. Ebenso kann man das Referenzbild oder einen Ausschnitt davon direkt an der Position des Fehlers in der Darstellung einblenden.

## Patentansprüche

1. Verfahren zum Anzeigen eines Fehlers, der sich an einer Prüfstelle (4) an einem Werkstück (1) befindet, mittels eines Bildauswertesystems, das mit zumindest einer beweglichen Kamera (2) ausgestattet ist, wobei das Werkstück (1) auf der Basis seiner geometrischen Daten in einer Darstellung (8) auf einem Bildschirm (7) zusammen mit einer Markierung (9) des Fehlers an der Prüfstelle (4) dargestellt wird, wobei
ein Bild (10) der Prüfstelle (4) in einer vorbestimmten Werkstückpose durch die zumindest eine Kamera (2) in einer jeweiligen vorbestimmten Kameraaufnahmepose aufgenommen wird,
wobei
die zumindest eine Kamera (2) eine hinsichtlich ihrer Kamerageometrie kalibrierte Kamera ist und
die Markierung (9) in der Darstellung (8) des Werkstücks (1) an der Prüfstelle (4) positioniert wird durch Auswerten des Bildes (10), der Werkstückpose, der jeweiligen Kameraaufhahmepose und der jeweiligen Kamerageometrie.

2. Verfahren nach Anspruch 1, wobei in der Darstellung (8) die Markierung (9) am Werkstück (1) positioniert wird aus einem Schnittpunkt einer Sichtlinie (6) im Bild (10) der zumindest einen Kamera (2) mit der Oberfläche des Werkstücks an der Prüfstelle (4).

3. Verfahren nach Anspruch 1 oder 2, wobei das Werkstück in derjenigen Werkstückpose auf dem Bildschirm dargestellt wird, in welcher das Bild (10) der Prüfstelle (4) des Werkstücks (1) aufgenommen wird.

4. Verfahren nach einem der vorherigen Ansprüche, wobei die zumindest eine Kamera (2) als 3D-Bildsensor ausgestaltet ist, der eine 3D-Position der Prüfstelle (4) ermittelt.

5. Verfahren nach einem der vorhergehenden Ansprüche, wobei das Bild (10) auf dem Bildschirm (7) nahe oder direkt an der Markierung (9) eingeblendet wird.

6. Verfahren nach einem der vorhergehenden Ansprüche, wobei ein Referenzbild (11) der Prüfstelle (4) auf dem Bildschirm (7) nahe oder direkt an der Markierung (9) eingeblendet wird.

7. Verfahren nach einem der vorhergehenden Ansprüche, wobei die zumindest eine Kamera (2) an einem beweglichen Roboterarm (3) angeordnet ist, wobei der Roboterarm hinsichtlich seiner Geometrie kalibriert wird.

8. Verfahren nach einem der vorhergehenden Ansprüche, wobei die zumindest eine Kamera (2) in einer Einrichtungsphase kalibriert wird.

9. Verfahren nach einem der vorhergehenden Ansprüche, wobei die vorbestimmte Werkstückpose und die jeweilige vorbestimmte Kameraaufnahmepose in einer Einteachphase mittels Vorzeigen des Werkstücks (1) der zumindest einen Kamera (2) definiert werden.

10. Bildauswertesystem, welches eingerichtet ist, das Verfahren nach einem der vorherigen Ansprüche auszuführen.

11. Programmcode, der, wenn in ein Bildauswertesystem geladen, das Verfahren nach einem der Ansprüche 1 bis 9 darin zur Ausführung bringt.

12. Computerprogrammprodukt, welches Programmcode enthält, der, wenn in ein Bildauswertesystem geladen, das Verfahren nach einem der Ansprüche 1 bis 9 darin zur Ausführung bringt.
